(19) Europäisches Patentamt / European Patent Office / Office européen des brevets

(11) **EP 1 005 147 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
*H02P 7/28* (2006.01)     *G05B 13/02* (2006.01)

(21) Anmeldenummer: **99122197.9**

(22) Anmeldetag: **06.11.1999**

(54) **Verfahren und Schaltungsanordnung zur Ermittlung einer optimalen Verstärkung des Integrators eines Drehzahlreglers**

Method and electronic circuit for determination of the optimal integrator gain for a speed controller

Méthode et circuit électrique pour déterminer le gain optimal de l'intégrateur d'un régulateur de vitesse

(84) Benannte Vertragsstaaten:
**CH DE FR GB IT LI**

(30) Priorität: **27.11.1998 DE 19854750**

(43) Veröffentlichungstag der Anmeldung:
**31.05.2000 Patentblatt 2000/22**

(73) Patentinhaber: **Dr. Johannes Heidenhain GmbH 83292 Traunreut (DE)**

(72) Erfinder: **Kerner, Norbert, Dipl.-Ing.(FH) 83374 Traunwalchen (DE)**

(56) Entgegenhaltungen:
**US-A- 5 223 778     US-A- 5 475 291 US-A- 5 587 896**

## Beschreibung

Die Erfindung betrifft ein Verfahren zur Ermittlung der optimaler Verstärkung des integrierenden Anteils einer Drehzahlregelung nach Anspruch 1.

Aus der US 5,157,597 ist bekannt, bei einem Servosystem Oszillationen im Betrieb zu erkennen und die Schleifenverstärkung von Regelschleifen zu verändern. Dabei wird eine Kennlinie für das Verhältnis von Verstärkung der Positionsregelschleife zu Positionsabweichung derart festgelegt, daß die Schleifenverstärkung für bestimmte Werte der Positionsabweichung einen großen Wert annimmt. Es wird im Betrieb periodisch die Positionsabweichung ermittelt und die Haupt-Schwingungskomponente der Positionsabweichung ermittelt. Schließlich wird die Schleifenverstärkung des Servosystems derart eingestellt, daß die Haupt-Schwingungskomponente in einen bestimmten Frequenzbereich fällt.

Dabei ist von Nachteil, daß während der Laufzeit der Frequenzbereich eingestellt wird, in dem das Servosystem anfängt zu oszillieren, die Oszillationsneigung aber nicht verringert wird. Somit erfolgt auch keine Optimierung der Reglerparameter. Unter unterschiedlichen Belastungszuständen kann sich der eingestellte Frequenzbereich verlagern, was zu einer Oszillation und damit zur Beschädigung der geregelten Baugruppen führen kann.

Aus der US 4,549,123 ist ein Verfahren zum Einstellen eines PID-Reglers bekannt. Dabei wird dem PID-Regler eine nichtlineare Baugruppe vorgeschaltet, deren Ausgangssignal entweder eine konstante negative oder positive Amplitude aufweist. Die Reglerparameter werden anschließend derart verändert, daß die Übertragungsfunktion der nichtlinearen Baugruppe multipliziert mit der gemeinsamen Übertragungsfunktion von Regler und Regelstrecke für eine bestimmte Amplitude und eine bestimmte Frequenz den Wert -1 ergibt und der derartig veränderte Regelkreis somit an diesem Punkt in Oszillation geraten kann. Danach werden gemäß den Formeln von Ziegler und Nichols verschiedene Kenngrößen berechnet und der Regler abhängig von den berechneten Kenngrößen eingestellt.

Dabei ist von Nachteil, daß die gesamte Reglerstuktur verändert werden muß, lediglich eine Änderung der Reglerparameter durchzuführen ist nicht vorgesehen.

Aus der EP 347 465 B1 ist bekannt, daß ein Servomotor bei geringen Drehzahlen eher zu Oszillationen neigt als bei großen Drehzahlen. Daher ist ein Regelkreis für den Servomotor vorgesehen, dessen Verstärkung im P- und I-Zweig des Reglers abhängig von der Drehzahl eingestellt wird. Dadurch wird erreicht, daß bei niedrigen Drehzahlen der Servomotor nicht zu oszillieren beginnt und bei hohen Drehzahlen keine unnötige Begrenzung des Drehmoments erfolgt.

Hierbei ist nachteilig, daß bereits optimale Startwerte für einen stabilen Betrieb vorhanden sein müssen, die dann lediglich an eine veränderte Drehzahl des Elektromotors angepaßt werden. Wie die Startwerte bestimmt werden, wird jedoch nicht offenbart.

Die US 547,529,1 und die US 558,789,6 offenbaren weitere, relativ aufwändige Verfahren zum Optimieren von Reglerparametern.

Aus der nicht vorveröffentlichten Patentanmeldung DE 197 34 208.6 der Anmelderin ist bekannt, daß zur automatischen Ermittlung optimaler Reglerparameter eines PI-Reglers in einem Drehzahlregelkreis wie folgt vorgegangen wird. Zur Einstellung einer Verstärkung im Proportional-Zweig des Reglers wird dem geregelten Elektromotor ein erstes Testsignal zugeleitet und der daraus resultierende Drehzahlverlauf in einem ersten Meßintervall über der Zeit ermittelt. Dieser Drehzahlverlauf wird mittels einer spezifischen Bewertungsfunktion bewertet. Ausgehend von einer geringen Verstärkung im Proportional- und Integralzweig der Reglers wird die Verstärkung im Proportional-Zweig so lange erhöht, bis mittels der Bewertungsfunktion eine beginnende Oszillation des Regelkreises detektiert wird. Die dann eingestellte Verstärkung im Proportional-Zweig wird mit einem Faktor kleiner eins, insbesondere von ca. 0,45, multipliziert und eingestellt. Zur Einstellung der Verstärkung im Integralzweig des Reglers wird dem Regelkreis anschließend ein zweites Testsignal als Führungsgröße zugeleitet. Es wird erneut der zeitliche Verlauf der Drehzahl des Elektromotors in einem Meßintervall ermittelt und mittels einer zweiten Bewertungsfunktion bewertet. Weiterhin wird mittels einer Fehlerfunktion eine Abweichung von der Solldrehzahl im Meßintervall ermittelt und ausgehend von einer Verstärkung im Integralzweig, bei der eine Oszillation vorliegt, die Verstärkung so lange verringert, bis ein Minimum der Fehlerfunktion erreicht wird. Die derart ermittelte Verstärkung wird dann im Integralzweig eingestellt.

Dabei ist von Nachteil, daß bei der Einstellung der Verstärkung im Integralzweig Oszillationen der mechanischen Komponenten, mit denen der Elektromotor verbunden ist, nicht schnell genug im Meßintervall abklingen. Dadurch wird regelmäßig eine etwas zu niedrige Verstärkung im Integralzweig eingestellt. Dadurch wird die Dynamik des Gesamtsystems, bestehend aus Regelkreis und Maschinenkomponenten, unnötig verschlechtert.

Es stellt sich somit die Aufgabe, ein Verfahren zur automatischen Bestimmung der Verstärkung im Integralzweig eines Reglers eines Drehzahlregelkreises anzugeben, wobei durch die Verstärkung ein Oszillieren der gesamten Antriebsbaugruppe zuverlässig verhindert wird und gleichzeitig möglichst genau das benötigte Drehmoment des Elektromotors zur Verfügung steht, so daß möglichst schnell die Soll-Drehzahl erreicht wird. Die Verstärkung soll dabei derart bestimmt werden, daß Einflüsse berücksichtigt werden, die sowohl durch den Elektromotor als auch durch weitere Baugruppen der Antriebsbaugruppe verursacht werden. Das Verfahren soll außerdem möglichst einfach und kostengünstig zu realisieren sein.

Diese Aufgabe wird durch die in Anspruch 1 angegebenen Merkmale gelöst.

Das erfindungsgemäße Verfahren weist den Vorteil auf, daß zur Bestimmung der Verstärkung im Integralzweig des Reglers zusätzlich die Nachstellzeit des Reglers berücksichtigt wird. Die Verstärkung im Integralzweig des Reglers wird zunächst gemäß dem nicht vorveröffentlichten Verfahren der Anmelderin bestimmt und anschließend proportional zur Nachstellzeit des Reglers gewählt. Dies wird durch eine Multiplikation der gemäß der DE 197 34 208.6 ermittelten Verstärkung für den Integralzweig mit der Nachstellzeit erreicht.

Die Erfindung wird im folgenden anhand der in der Zeichnung dargestellten Ausführungsformen näher erläutert.

Es zeigen:

Fig. 1: eine elektromechanische Antriebsbaugruppe,

Fig. 2: ein Blockschaltbild einer Drehzahlregelung für einen Elektromotor,

Fig. 3 ein Testsignal zur Bestimmung der Verstärkung des P-Anteils des Drehzahlreglers und eine Bewertungsfunktion zur Beurteilung des- sen Stabilität,

Fig. 4 ein Soll-Drehzahlverlauf und mögliche Ist-Drehzahlverläufe für un- terschiedliche Verstärkungen des I-Anteils,

Fig. 5 eine Bewertungsfunktion zur Beurteilung der Stabilität des I-Anteils des Drehzahlreglers und

Fig. 6 die Definition der Nachstellzeit tn bei einem PI-Regler.

Es wird im folgenden davon ausgegangen, daß das erfindungsgemäße Verfahren zur Ermittlung optimaler Reglerparameter für eine Drehzahlregelung bei einem Servomotor einer Werkzeugmaschine angewandt wird. Für den Fachmann ist jedoch unmittelbar klar, daß das erfindungsgemäße Verfahren auch bei jedem anderen, in eine mechanische Anordnung eingebundenen Elektromotor benutzt werden kann, dessen Drehzahl schnellstmöglich auf eine Solldrehzahl geregelt werden soll, beispielsweise einem Spindelmotor.

Das aus der DE 197 34 208 der Anmelderin bekannt Verfahren zur Bestimmung der Reglerparameter wird bei dem erfindungsgemäßen Verfahren mitbenutzt und wird im folgenden nochmals ausführlich beschrieben.

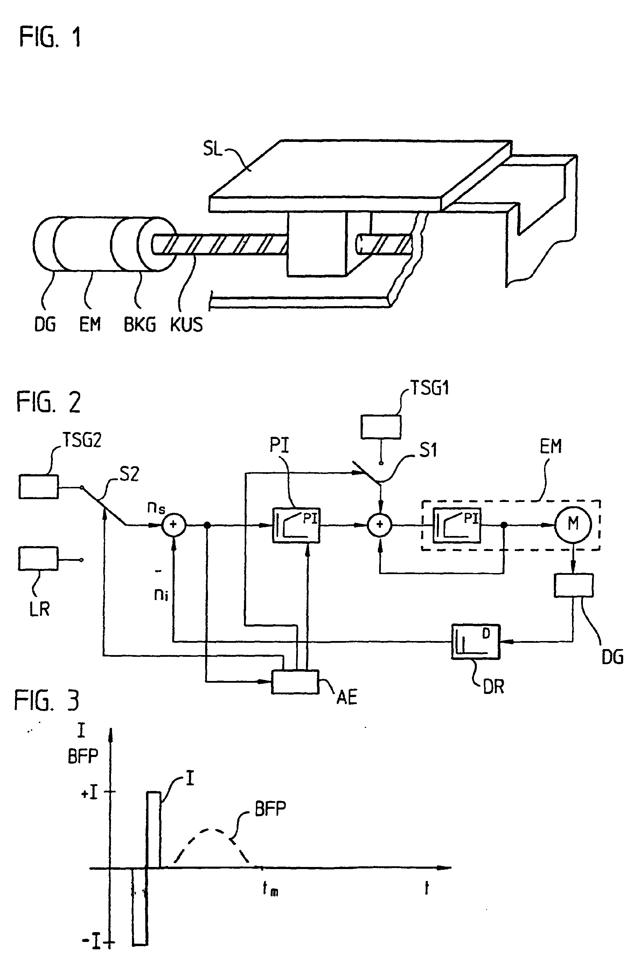

Fig. 1 zeigt ein Beispiel einer möglichen Antriebsbaugruppe, in der ein Elektromotor EM mit einem Drehgeber DG und weiteren mechanischen Baugruppen wie beispielsweise einer Baugruppe BKG gekoppelt ist, die eine Bremse, eine Kupplung und ein Getriebe für den Elektromotor EM beinhalten kann. Dabei ist es nicht zwingend erforderlich, daß die Baugruppe BKG alle drei genannten Funktionen realisiert. Die durch den Elektromotor EM erzeugte Drehbewegung wird über eine Kugelumlaufspindel KUS an einen Schlitten SL weitergeleitet, auf dem ein Werkstück eingespannt sein kann, so daß auch diese beiden Baugruppen zur Antriebsbaugruppe gehören.

Für eine Vielzahl von Bearbeitungsschritten von auf dem Schlitten eingespannten Werkstücken ist es zwingend erforderlich, daß der Schlitten SL mit konstanter Geschwindigkeit verfahren wird. Um dies sicherzustellen, wird die Drehzahl des Elektromotors EM geregelt.

Fig. 2 zeigt einen möglichen Regelkreis zur Drehzahlregelung des Elektromotors EM. Der Elektromotor EM weist einen vorgeschalteten Stromregler auf, der aber für die vorliegende Erfindung nicht von Bedeutung ist. Die Ist-Drehzahl ni des Elektromotors EM wird durch zeitliches Differenzieren der Positionswerte eines Drehgebers DG in einem Differenzierer DR ermittelt und mit negativem Vorzeichen in einem Addierer zu der vorgegebenen Soll-Drehzahl ns , die die Führungsgröße darstellt, addiert.

Die Regelabweichung ns-ni wird durch einen Regler PI, der insbesondere einen Proportional- und Integral-Zweig (P- und I-Zweig) mit der entsprechenden P- und I-Regelcharakteristik aufweist, deren Verstärkungen separat einstellbar sind, dem Elektromotor EM zugeleitet.

Der Regler PI gibt aufgrund seiner Charakteristik ein um die im P-Zweig eingestellte Verstärkung verstärktes Eingangssignal und eine um die im I-Zweig eingestellte Verstärkung verstärkte Summe aus Eingangssignalen, die während einer bestimmten Dauer vorlagen, aus. Der vorliegende Regler PI weist im wesentlichen eine derartige PI-Charakeristik auf, es besteht aber die Möglichkeit, daß der Regler PI auch weitere Charakteristiken aufweist.

Weiterhin sind erfindungsgemäß zwei Schalter S1 und S2 sowie zwei Testsignalgeneratoren TSG1 und TSG2 vorgesehen. Durch S1 wird Testsignalgenerator TSG1 mit einem Addierer verbunden, der die Summe der Ausgangssignale des Reglers PI und des Testsignalgenerators TSG1 dem Elektromotor EM zuleitet. Durch S2 kann als Führungsgröße das Ausgangssignal des Testsignalgenerators TSG2 ausgewählt werden. Zudem ist eine Analyseeinheit AE vorgesehen, der das Eingangssignal des Reglers PI und über einen in Fig. 2 nicht dargestellten Abgriff das Ausgangssignal des Differenzierers DR zugeleitet wird und die sowohl eine Recheneinheit als auch eine Steuereinheit zur Steuerung der Schalter S1 und S2 sowie der Testsignalgeneratoren TSG1 und TSG2 beinhaltet. Darüber hinaus steuert die Steuereinheit auch die Einstellung der unterschiedlichen Verstärkungen in den Zweigen des Reglers PI. Die Recheneinheit der Analyseeinheit AE führt während kurzer Meßintervalle die Abtastung und Quantifizierung des Eingangssignals des Reglers PI und des Ausgangssignals des Differenzierers DR sowie deren Bewertung und die Ermittlung der unterschiedlichen Fehlerfunktionen durch.

Damit der Regelkreis nicht längere Zeit oszilliert, also im Betrieb keine ungedämpfte Schwingung entsteht, durch die mechanische oder elektrische Komponenten der gesamten Anordnung aus Fig. 1 beschädigt werden könnten, werden die beiden Verstärkungen des P- und I-Zweigs des Reglers PI nur für die kurzen Meßintervalle entsprechend nacheinander eingestellt. Außerhalb der Meßintervalle werden in P- und I-Zweig Verstärkungen eingestellt, die sicher ein Oszillieren des Regelkreises verhindern.

In einem ersten Schritt wird zur Ermittlung der optimalen Verstärkungen im P-Zweig des Reglers PI die Führungsgröße Soll-Drehzahl ns nicht durch einen Lageregelkreis LR vorgegeben, wie im herkömmlichen Betrieb, sondern es wird über einen zweiten Schalter S2 ein konstanter Wert, insbesondere Null als Soll-Drehzahl ns vorgegeben. Zusätzlich wird über einen ersten Schalter S1 das Signal eines ersten Testsignalgenerators TSG 1 dem Regelkreis nach dem Regler PI zugeleitet. Dadurch werden dem Elektromotor EM Stromimpulse vorgegeben, die den maximal zulässigen Strom für den Elektromotor EM nicht überschreiten und eine eventuell vorhandene Strombegrenzungsschaltung nicht aktiviert wird. Dieser Strom wird für sehr kurze Zeit, beispielsweise die Dauer einer Zeitkonstanten des Regelkreises, vorgegeben, so daß ein Stromimpuls an den Elektromotor EM ausgegeben wird, wie in Fig. 3 ab dem Zeitpunkt to dargestellt. Im Anschluß an den Stromimpuls ist in Fig. 3 eine mögliche Bewertungsfunktion BFP für die Ist-Drehzahl ni, die nach dem Stromimpuls durch den Regelkreis im Elektromotor EM eingestellt wird, dargestellt.

Bevor der Stromimpuls ausgegeben wird befindet sich der Elektromotor im Stillstand. Da die Neigung zu Oszillieren aus dem Stillstand größer ist als im Betrieb, wird dadurch sichergestellt, daß die Stabilität im labilsten Zustand des Elektromotors EM ermittelt wird.

Die Drehzahl des Elektromotors EM wird während einer kurzen Meßzeit tm abgetastet und quantisiert. Bei einer nicht erwünschten Oszillation weist die Ist-Drehzahl ni einen ungedämpften oder nur schwach gedämpften Verlauf auf. Tritt keine Oszillation auf, so verringert sich die Ist-Drehzahl ni schnell, da zwischenzeitlich durch den ersten Testsignalgenerator TSG1 als Soll-Drehzahl ns Null eingestellt ist, bzw. dieser über Schalter S1 vom Regelkreis getrennt wird. Wird nun nach Formel (1) das Verhältnis V von mit einer Bewertungsfunktion BFP multiplizierten Abtastwerten der Ist-Drehzahl ni zu unbewerteten Abtastwerten der Ist-Drehzahl ni berechnet, so liegt dann keine Oszillation vor, wenn das Verhältnis V<1 ist.

$$V = \frac{\sum_{i=0}^{m}\left|ni(t_i)*\left(1-\cos\left(2\pi\frac{t_i}{t_m}\right)\right)\right|}{\sum_{i=0}^{m}\left|ni(t_i)\right|} \qquad (1)$$

Bei der gewählten Bewertungsfunktion BFP ist lediglich darauf zu achten, daß diese am Anfang des Meßintervalls einen Wert nahe Null aufweisen sollte und der Quotient aus der Summe der Bewertungsfaktoren der Bewertungsfunktion BFP durch die Anzahl der Bewertungsfaktoren ein Resultat von eins aufweisen muß. Ansonsten kann die Bewertungsfunktion BFP weitgehend beliebig gewählt werden.

Dieser erste Schritt wird zunächst für eine kleine Verstärkung im P-Zweig des Reglers durchgeführt, so daß ein Oszillieren nicht möglich ist. Der I-Zweig wird während der Messung deaktiviert, indem dessen Verstärkung auf sehr kleine Werte oder Null eingestellt wird. Danach wird die Verstärkung ausschließlich im P-Zweig so lange erhöht, bis das Verhältnis V fast den Wert 1 erreicht hat. Anschließend wird der so ermittelte Wert der Verstärkung für den P-Zweig mit einem Faktor kleiner 1, beispielsweise mit dem Faktor 0,45 gemäß Ziegler und Nichols, multipliziert und im P-Zweig des Reglers PI eingestellt. Dadurch wird sichergestellt, daß durch den P-Zweig keine Oszillation des Elektromotors EM und der daran angeschlossenen mechanischen Komponenten verursacht werden kann.

Aufgrund der definierten Anregung des Elektromotors EM durch den ersten Testsignalgenerator TSG1 mit einem impulsartigen Strom wird sichergestellt, daß im wesentlichen nur durch den P-Zweig des Regelkreises auf diese Anregung reagiert wird. Derart ist es durch die Wahl des Anregungssignals des Testsignalgenerators TSG gelungen auf besonders einfache Weise den P-Anteil des Reglers PI zu separieren. Da die Schwingungsneigung der Antriebsbaugruppe aus der spannungsfreien Ruhelage heraus am größten ist, wird der Elektromotor EM zunächst durch Stromimpulse in diesen spannungsfreien Zustand gebracht. Nachdem diese Stromimpulse vom Testsignalgenerator TSG 1 ausgegeben wurde, wird Schalter S1 wieder geöffnet.

Unmittelbar vor dem Regler PI wird das invertierte Differenzsignal der Drehzahlen ns-ni zur Analyse abgegriffen. Dies weist den Vorteil auf, daß die Stabilitätsbestimmung unabhängig von einer absoluten Drehzahl erfolgen kann. Insbesondere bei Vertikalachsen, die ihren spannungsfreien und somit dämpfungsärmsten Zustand in der Regel nicht bei der Drehzahl Null haben, ist dies vorteilhaft.

In einem zweiten Schritt zur Bestimmung der Reglerparameter wird dem Regelkreis zur Ermittlung der Verstärkung im I-Zweig eine Soll-Drehzahl ns durch einen zweiten Testsignalgenerator TSG 2 vorgegeben, die gemäß einer Sprungfunktion verläuft. Dafür wird Testsignalgenerator TSG 2 über Schalter S2 mit dem Eingang des Regelkreises verbunden. Der Soll-Drehzahlsprung wird derart berechnet, daß der Elektromotor EM nicht überlastet wird und keine Begrenzung des Stroms erfolgt. Dabei wird während eines kurzen Meßintervalls die Sprungantwort des Elektromotors EM abgetastet und quantisiert.

Dann wird eine Fehlerfunktion F nach Formel (2) berechnet, die aus der Summe der Drehzahlen besteht, die über der Soll-Drehzahl ns und dem Quadrat der Summe der Drehzahlen, die unter der Soll-Drehzahl ns liegen. Zusätzlich erfolgt in Formel (2) eine zeitliche Bewertung des Einschwingverhaltens des Regelkreises durch eine Bewertungsfunktion BFI.

$$F = \sum_{i=0}^{l} bfi(i) * (ni - ns) + \sum_{j=0}^{k} bfi(j) * (nj - ns)^2 \quad \text{mit} \ (ni\text{-}ns) > 0 \ \text{und} \ (nj\text{-}ns) < 0$$

$$(2)$$

Durch die Quadrierung gehen die Unterschreitungen nj der Soll-Drehzahl ns wesentlich stärker als Fehler in die Berechnung ein, als Überschreitungen ni der Drehzahl. Es hat sich in der Praxis gezeigt, daß eine derartige lineare Bewertung von Drehzahlüberschreitungen ni und quadratische von Drehzahlunterschreitungen nj bezüglich der Soll-Drehzahl ns eine schnellstmögliche Annäherung an die Soll-Drehzahl ns bewirkt.

Zusätzlich wird in Formel (2) eine Bewertungsfunktion BFI zur Gewichtung der Abweichungen von der Drehzahl durchgeführt. Die Summanden werden dafür noch mit einem Koeffizienten bfi multipliziert. Durch die Bewertungsfunktion BFI wird erreicht, daß ein erstes Überschreiten der Soll-Drehzahl ns am Anfang des Meßintervalls nahezu ohne Bedeutung ist, wohingegen ein darauffolgendes Unterschreiten der Soll-Drehzahl ns in der Mitte oder am Ende des Meßintervalls besonders stark bewertet wird.

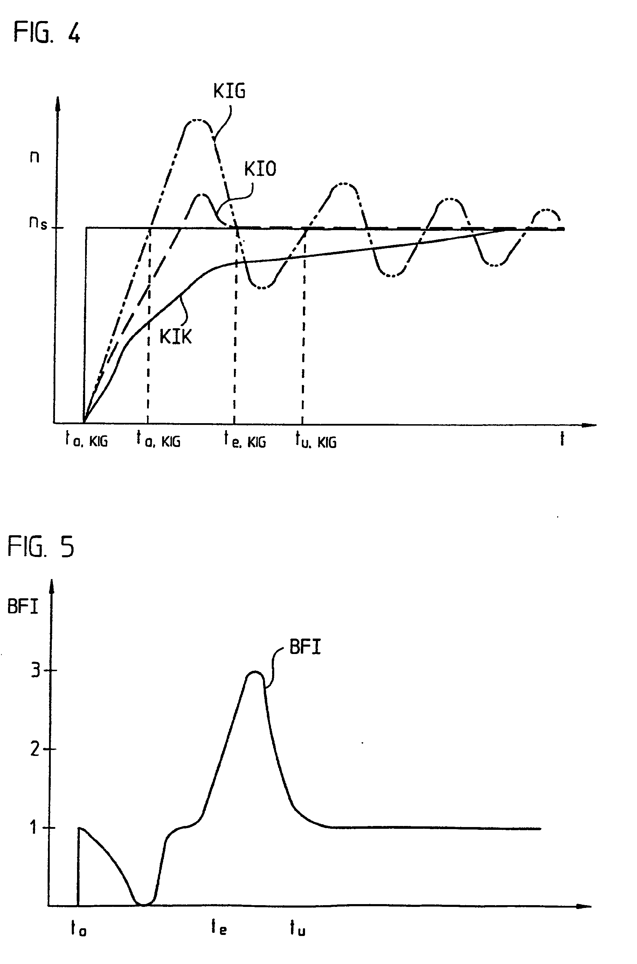

Fig. 4 zeigt verschiedene Verläufe der Ist-Drehzahl ni. Vom zweiten Testsignalgenerator TSG 2 wird als Führungsgröße zum Zeitpunkt to die Soll-Drehzahl ns ausgegeben. Bei einer zu großen Verstärkung im I-Zweig des Reglers PI wird die Drehzahl gemäß der Kurve KIG verlaufen und viele große Über- und Unterschwinger um die Soll-Drehzahl ns aufweisen. Bei zu kleiner Verstärkung im I-Zweig wird die Drehzahl gemäß der Kurve KIK verlaufen und sich nur langsam an die Soll-Drehzahl ns annähern. Bei annähernd optimaler Verstärkung im I-Zweig des Reglers PI weist die Ist-Drehzahl ni einen nahezu optimalen Verlauf gemäß der Kurve KIO auf und erreicht schnellstmöglich ohne Nachschwingen die Soll-Drehzahl ns. Die angegebenen Zeitpunkte ta, te und tu beziehen sich auf die Kurve KIG.

In Fig. 5 ist der Verlauf der Bewertungsfunktion BFI für die Kurven KIG aus Fig. 4 dargestellt. Man erkennt, daß zunächst der Drehzahlverlauf im Zeitraum zwischen to und ta nicht berücksichtigt wird. Weiterhin ist die geringe Gewichtung des ersten Überschwingers zwischen den Zeitpunkten ta und te und die starke Bewertung des ersten Unterschwingers zwischen den Zeitpunkten te und tu zu erkennen. Die Gewichtung nach dem Zeitpunkt tu variiert nicht mehr. Die Zeitpunkte tu und ta sind Vielfache von ta und werden daher bei jeder Messung neu bestimmt. Die Zeitdauer zwischen tu und te sowie zwischen te und ta entspricht jeweils ungefähr der 2,5-fachen Dauer zwischen ta und to.

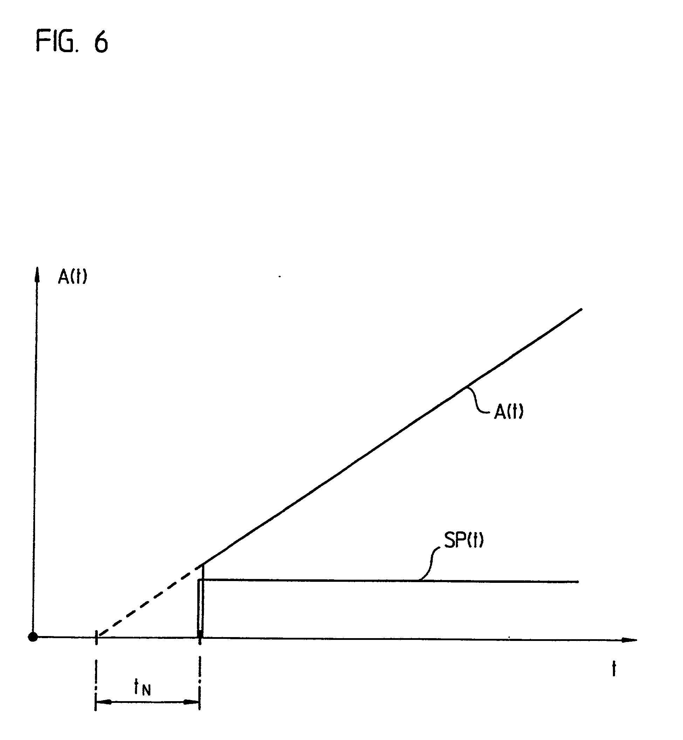

Um die optimale Kurve KIO des Drehzahlverlaufs noch genauer zu ermitteln, das heißt die optimale Verstärkung im 1-Zweig noch genauer einstellen zu können, wird erfindungsgemäß zusätzlich die Nachstellzeit tn des Reglers PI berücksichtigt, die gemäß Fig. 6 definiert wird. Fig. 6 zeigt das Reglerausgangssignal A(t) bei offenem Regelkreis, wenn der Regler PI mit einer Sprungfunktion Sp(t) angeregt wird. Die Nachstellzeit tn ergibt sich anschaulich als die Zeitdauer zwischen dem Zeitpunkt, an dem das Reglerausgangssignal A(t) ungleich Null ist und dem Zeitpunkt, an dem die Verlängerung der Steigung des Reglerausgangssignals A(t) Null ist. Die Nachstellzeit tn wird aus dem Quotienten aus Verstärkungsfaktor im P-Zweig durch Verstärkungsfaktor im I-Zweig des Reglers PI berechnet. Um eine verbesserte Bewertung durch die Bewertungsfunktion BFI zu erreichen, werden die Koeffizienten bfi(i) der Bewertungsfunktion BFI mit der Nachstellzeit tn multipliziert. Die Berechnung der Nachstellzeit tn und der Koeffizienten bfi(i) der Bewertungsfunktion BFI erfolgt so lange iterativ, bis eine optimale Verstärkung für den I-Zweig ermittelt wurde. Um der Nachstellzeit tn ein verstärktes Gewicht in der Bewertungsfunktion BFI zu geben, besteht auch die Möglichkeit, die Koeffizienten bfi(i) der Bewertungsfunktion BFI p-fach mit der Nachstellzeit tn zu multiplizieren, wie in Formel (3) angegeben.

$$bfi_{neu}(i) = bfi_{alt}(i) * t_n^P \qquad\qquad (3)$$

Zusätzlich zur Bewertung des Einschwingverhaltens der Istdrehzahl ni auf die Soll-Drehzahl ns, das durch die eingestellten Reglerparameter des Regelkreises beeinflußt wird, wird die Anregelzeit ta, die vergeht bis die Ist-Drehzahl ni erstmals die Soll-Drehzahl ns erreicht hat, bewertet. Hierfür wird eine weitere Fehlerfunktion FF gemäß Formel (4) berechnet.

$$FF = F * t_a^k \quad \text{mit } k = 1 \dots 3 \tag{4}$$

Bei der Einstellung der Verstärkung im I-Zweig wird von einer großen Verstärkung ausgehend, bei der eine Oszillation in der Antriebsbaugruppe vorliegt, die Verstärkung bis zu einem Minimum der Größe FF aus Formel (4) verringert. Anschließend wird die Verstärkung wieder erhöht, bis eine merkliche Verschlechterung der Größe FF aus Formel (4) im Bereich von 10% vorliegt. Dann wird der unmittelbar davor ermittelte Wert für die Verstärkung im I-Zweig benutzt.

Die vom Testsignalgeneratoren TSG 1 ausgegebenen Anregungssignale für den Elektromotor EM können in einer vorteilhaften Ausgestaltung derart ausgebildet sein, daß unmittelbar anschließend an die impulsförmige Vorgabe einer Drehzahl, die einen Stromimpuls I auslöst, ein identisches Anregungssignal mit negativem Vorzeichen vorgegeben wird, wie in Fig. 3 dargestellt. Die zusätzliche negative impulsförmige Drehzahlvorgabe führt beim Freischlagen der Antriebsbaugruppe zu wesentlich verbesserten Ergebnissen. Dies resultiert daraus, daß aufgrund der elastischen mechanischen Kopplung von Elektromotor EM mit den übrigen Baugruppen der Antriebsbaugruppe eine drehwinkelabhängige Kraft auf den Rotor des Elektromotors EM ausgeübt werden kann. Durch das Freischlagen mittels positiven und negativen Stromimpulsen bewegt sich der Rotor des Elektromotors EM in eine kraftfreie Stellung, die sowohl in positiver als auch negativer Drehrichtung liegen kann.

Weiterhin wird bei der sprungförmigen Drehzahlvorgabe durch den Testsignalgenerator TSG2 unmittelbar an das erste Anregungssignal anschließend ein zusätzliches Anregungssignal gleichen Betrags aber mit negativem Vorzeichen ausgegeben. Eine derartige Ergänzung der impuls- und sprungförmigen Anregungssignale weist den Vorteil auf, daß während der Bestimmung der Verstärkungen im P- und I-Zweig der Rotor des Elektromotors EM wieder die gleiche Ausgangsstellung aufweist. Dadurch wird ein im normalen Betrieb überlagerter Lageregler nicht zu einer Regelung angeregt.

Weiterhin besteht die Möglichkeit bei einer Anregung durch eine Sprungfunktion auch für die umgekehrte Drehrichtung die Verstärkung im I-Zweig zu ermitteln und die einzustellende Verstärkung für den I-Zweig aufgrund der beiden Werte der Fehlerfunktion FF zu bestimmen. Dies ist besonders bei Elektromotoren EM vorteilhaft, deren Belastung drehrichtungsabhängig ist, wie beispielsweise bei Motoren für Vertikalachsen.

**Patentansprüche**

1.  Verfahren zur Ermittlung einer optimalen Verstärkung des Integrators einer Drehzahlregelung für einen Elektromotor (EM) einer Antriebsbaugruppe, bei dem Parameter in Zweigen unterschiedlicher Regelcharakteristik, welche einen Regler (PI) eines Regelkreises für den Elektromotor (EM) bilden, bestimmt werden und wobei der Regelkreis durch Testsignale angeregt wird, welche derart gewählt werden, daß nur ein einzelner oder mehrere spezielle Zweige des Reglers (PI) angeregt werden und anschließend die Parameter so lange verändert werden, bis der Regelkreis ein optimales Regelverhalten aufweist und die derart für einen oder mehrere Zweige des Reglers (PI) ermittelten Parameter im entsprechenden Zweig des Reglers (PI) eingestellt werden wobei zur Bestimmung einer optimalen Verstärkung zumindest im Integralzweig des Reglers (PI) eine Bewertungsfunktion (BFI) auf die Differenz zwischen Solldrehzahl (ns) und Istdrehzahl (ni, nj) angewendet wird, **dadurch gekennzeichnet, daß** in die Bewertungsfunction auch die Nachstellzeit (tn) des Regelkreises eingeht, wobei die Nachstellzeit (tn) als Quotient eines Verstärkungsfaktors eines P-Zweigs und eines Verstärkungsfaktors eines Zweigs multiplikativ in Koeffizienten (bfi_{neu} (i)) der Bewertungsfunktion (BFI) eingeht.

2.  Verfahren nach Anspruch 1, **dadurch gekennzeichnet,**

    ■ daß in einem ersten Schritt zur Einstellung einer Verstärkung im Proportional-Zweig des Reglers (PI) dem Elektromotor (EM) ein erstes Testsignal zugeleitet wird,
    ■ daß der zeitliche Verlauf der Ist-Drehzahl (ni) des Elektromotors (EM) in einem Meßintervall ermittelt und durch eine erste Bewertungsfunktion (BFP) bewertet wird,
    ■ daß die Verstärkung im Proportional-Zweig des Reglers (PI), ausgehend von einer geringen Verstärkung im Proportional- und Integral-Zweig des Reglers (PI), so lange erhöht wird, bis aufgrund der Bewertung mit der Bewertungsfunktion (BFP) eine beginnende Oszillation des Regelkreises detektiert wird,

■ daß die im Proportional-Zweig des Reglers (PI) bei beginnender Oszillation eingestellte Verstärkung mit einem Faktor kleiner eins multipliziert und im Proportional-Zweig des Reglers (PI) eingestellt wird,

■ daß in einem zweiten Schritt zur Einstellung der Verstärkung im Integral-Zweig des Reglers (PI) ein zweites Testsignal dem Regelkreis als Führungsgröße zugeleitet wird,

■ daß der zeitliche Verlauf der Ist-Drehzahl (ni) des Elektromotors (EM) in einem Meßintervall ermittelt, durch eine zweite Bewertungsfunktion (BFI), in die auch die Nachstellzeit (tn) eingeht, bewertet wird und aufgrund einer Fehlerfunktion (FF) ein Abweichen von der Soll-Drehzahl (ns) im Meßintervall quantifiziert wird,

■ daß die Verstärkung im Integral-Zweig des Reglers (PI) ausgehend von einer großen Verstärkung, bei der eine Oszillation vorliegt, so lange verringert wird, bis ein Minimum der Fehlerfunktion (FF) vorliegt, und diese Verstärkung eingestellt wird.

3. Verfahren nach Anspruch 2, **dadurch gekennzeichnet, daß** die Verstärkung im Integral-Zweig des Reglers (PI) so lange erhöht wird, bis der Wert der Fehlerfunktion (FF) sich um einen bestimmten Prozentsatz erhöht hat und daß diese Verstärkung eingestellt wird.

4. Verfahren nach einem der Ansprüche 1 bis 3, **dadurch gekennzeichnet, daß** als erstes Testsignal ein Stromimpuls benutzt wird.

5. Verfahren nach einem der Ansprüche 1 bis 3, **dadurch gekennzeichnet, daß** als erstes Testsignal zwei unmittelbar aufeinanderfolgende Stromimpulse benutzt werden, die gleichen Betrag aber unterschiedliche Polarität aufweisen.

6. Verfahren nach einem der Ansprüche 4 oder 5, **dadurch gekennzeichnet, daß** die Amplitude der Stromimpulse auf die für den Elektromotor maximal zulässige Stromstärke oder auf eine Stromstärke, bei der eine eventuell vorhandene Strombegrenzung einsetzt, begrenzt werden.

7. Verfahren nach Anspruch 2, **dadurch gekennzeichnet, daß** die erste Bewertungsfunktion (BFP) am Anfang des Meßintervalls einen Wert nahe Null aufweist und der Quotient aus der Summe der Bewertungsfaktoren der ersten Bewertungsfunktion (BFP) und der Anzahl der Bewertungsfaktoren den Wert Eins aufweist.

8. Verfahren nach einem der Ansprüche 2 bis 7, **dadurch gekennzeichnet, daß** die Koeffizienten (bfi(i)) der Bewertungsfunktion (BFI) mit der Nachstellzeit (tn) multipliziert werden.

9. Verfahren nach Anspruch 2 oder 8, **dadurch gekennzeichnet, daß** das Verhältnis (V) des mit der ersten Bewertungsfunktion (BFP) bewerteten Drehzahlverlaufs zu dem unbewerteten Drehzahlverlauf ermittelt wird und bei einem Verhältnis kleiner eins keine Oszillation detektiert wird.

10. Verfahren nach Anspruch 2, **dadurch gekennzeichnet, daß** die im Proportional-Zweig des Reglers (PI) bei beginnender Oszillation eingestellte Verstärkung mit einem Faktor im Bereich von 0,45 multipliziert wird.

11. Verfahren nach Anspruch 1 oder 2, **dadurch gekennzeichnet, daß** als zweites Testsignal eine Sprungfunktion benutzt wird.

12. Verfahren nach Anspruch 11, **dadurch gekennzeichnet, daß** die Sprunghöhe der Sprungfunktion aufgrund der im Proportional-Zweig eingestellten Verstärkung und der für den Elektromotor (EM) maximal zulässigen Stromstärke berechnet wird.

13. Verfahren Anspruch 11 oder 12, **dadurch gekennzeichnet, daß** als zweites Testsignal zwei Sprungfunktionen benutzt werden, wobei die zweite Sprungfunktion zeitlich unmittelbar an die erste Sprungfunktion anschließt, die gleiche Sprunghöhe aber unterschiedliches Vorzeichen aufweist.

**Claims**

1. A method for determining an optimal gain of the integrator of a rotational speed controller for an electric motor (EM) of a drive module, in which parameters in branches of different control characteristics are determined, which form a controller (PI) of a control circuit for the electric motor (EM), and wherein the control circuit is excited by test signals which are chosen in such a way that only a single one or more special branches of the controller (PI) are excited and the parameters are subsequently varied until the control circuit displays an optimal control behaviour and until the parameters for one or more of the branches of the controller (PI) determined in this manner are set in the corresponding branch of the controller (PI), an evaluation function (BFI) being applied to the difference between target rotation rate (ns) and actual rotation rate (ni, nj) to determine an optimal gain at least in the integral branch of the controller (PI), **characterized in that** the reset time (tn) of the control circuit also enters into the evaluation function, wherein the reset time (tn) enters multiplicatively into coefficients ($bfi_{neu}(i)$) of the evaluation function (BFI) as the quotient of a gain factor of a P-branch and a gain factor of an 1-branch.

2. The method according to Claim 1, **characterized in that**

■ in a first step in order to set a gain in the proportional branch of the controller (PI), a first test signal is fed to the electric motor (EM),
■ the temporal progression of the actual rotation rate (ni) of the electric motor (EM) is determined in a measurement interval and evaluated by a first evaluation function (BFP),
■ the gain in the proportional branch of the controller (PI), starting from a small gain in the proportional and the integral branch of the controller (PI), is increased until the start of oscillation of the control circuit is detected based on the evaluation with the evaluation function (BFP),
■ the gain that is set in the proportional branch of the controller (PI) at the start of oscillation is multiplied by a factor less than one and set in the proportional branch of the controller (PI),
■ in a second step in order to set the gain in the integral branch of the controller (PI), a second test signal is fed to the control circuit as a reference variable,
■ the temporal progression of the actual rotation rate (ni) of the electric motor (EM) is determined in a measurement interval, evaluated by means of a second evaluation function (BFI), into which the reset time (tn) also enters, and based on an error function (FF) a deviation from the target rotation rate (ns) is quantified in the measurement interval,
■ the gain in the integral branch of the controller (PI), starting from a large gain at which an oscillation is present, is reduced until a minimum of the error function occurs, and this gain is set.

3. The method according to Claim 2, **characterized in that** the gain in the integral branch of the controller (PI) is increased until the value of the error function (FF) has increased by a specific percentage and this gain is set.

4. The method according to one of Claims 1 to 3, **characterized in that** a current pulse is used as a first test signal.

5. The method according to one of Claims 1 to 3, **characterized in that** two immediately consecutive current pulses, which have the same value but different polarity, are used as a first test signal.

6. The method according to one of Claims 4 or 5, **characterized in that** the amplitudes of the current pulses are limited to the maximum permissible current strength for the electric motor, or to a current strength at which any current limit that may be present comes into effect.

7. The method according to Claim 2, **characterized in that** at the start of the measurement interval the first evaluation function (BFP) has a value close to zero and the quotient formed from the sum of the evaluation factors of the first evaluation function (BFP) and the number of evaluation factors has the value one.

8. The method according to one of Claims 2 to 7, **characterized in that** the coefficients (bfi(i)) of the evaluation function (BFI) are multiplied by the reset time (tn).

9. The method according to Claim 2 or 8, **characterized in that** the ratio (V) of the rotation rate progression evaluated with the first evaluation function (BFP) to the unevaluated rotation rate progression is determined and if the ratio is less than one, no oscillation is detected.

10. The method according to Claim 2, **characterized in that** the gain that is set in the proportional branch of the controller (PI) at the start of oscillation is multiplied by a factor in the region of 0.45.

11. The method according to Claim 1 or 2, **characterized in that** a step function is used as a second test signal.

12. The method according to Claim 11, **characterized in that** the step height of the step function is calculated on the basis of the gain set in the proportional branch and the maximum permissible current strength for the electric motor (EM).

13. The method according to Claim 11 or 12, **characterized in that** two step functions are used as a test signal, wherein the second step function is directly temporally adjacent to the first step function, which is of the same step height but opposite sign.

**Revendications**

1. Procédé pour déterminer une amplification optimale de l'intégrateur d'un réglage de régime pour un moteur électrique (EM) d'un ensemble d'entraînement, dans lequel des paramètres sont déterminés dans des branches de caractéristique de réglage différente, qui forment un régulateur (PI) d'un circuit de réglage pour le moteur électrique (EM), et le circuit de réglage étant réglé par des signaux test qui sont choisis de telle sorte qu'une seule branche individuelle ou plusieurs branches spéciales du régulateur (PI) sont excitées et les paramètres sont modifiés ensuite jusqu'à ce que le circuit de réglage présente un comportement de réglage optimal, et les paramètres déterminés pour une ou plusieurs branches de régulateur (PI) sont réglés dans la branche correspondante du régulateur (PI), une fonction d'évaluation (BFI) étant appliquée à la différence entre le régime prévu (ns) et le régime réel (ni, nj) pour déterminer une amplification optimale au moins dans la branche d'intégrale du régulateur (PI), **caractérisé en ce que** le temps d'ajustage (tn) du circuit de réglage est intégré également dans la fonction d'évaluation, le temps d'ajustage (tn) étant intégré comme quotient d'un facteur d'amplification d'une branche P et d'un facteur d'amplification d'une branche I de façon multiplicative dans des coefficients ($bfi_{neu}(i)$) de la fonction d'évaluation (BFI).

2. Procédé selon la revendication 1, **caractérisé en ce que**

   ■ un premier signal test est amené au moteur électrique (EM) dans une première étape pour le réglage d'une amplification dans la branche proportionnelle du régulateur (PI),
   ■ **en ce que** la courbe dans le temps du régime réel (ni) du moteur électrique (EM) est déterminée dans un intervalle de mesure et est évaluée par une première fonction d'évaluation (BFP),
   ■ **en ce que** l'amplification de la branche proportionnelle du régulateur (PI) est augmentée à partir d'une faible amplification dans la branche proportionnelle et la branche d'intégrale du régulateur (PI) jusqu'à ce qu'une oscillation commençante du circuit de réglage soit détectée sur la base de l'évaluation avec la fonction d'évaluation (BFP),
   ■ **en ce que** l'amplification, qui est réglée dans la branche proportionnelle du régulateur (PI) avec l'oscillation commençante, est multipliée avec un facteur inférieur à un et est réglée dans la branche proportionnelle du régulateur (PI),
   ■ en qu'un second signal test est amené au circuit régulateur comme grandeur de guidage dans une seconde étape pour le réglage de l'amplification dans la branche d'intégrale du régulateur (PI),
   ■ **en ce que** la courbe dans le temps du régime réel (ni) du moteur électrique (EM) est déterminée dans un intervalle de mesure, est évaluée par une seconde fonction d'évaluation (BFI), dans laquelle intervient également le temps d'ajustage (tn) et un écart par rapport au régime prévu (ns) est quantifié dans l'intervalle de mesure sur la base d'une fonction d'erreur (FF),
   ■ **en ce que** l'amplification dans la branche d'intégrale du régulateur (PI) est réduite à partir d'une grande amplification, pour laquelle on a une oscillation, jusqu'à ce qu'on ait un minimum de la fonction d'erreur (FF), et que cette amplification soit réglée.

3. Procédé selon la revendication 2, **caractérisé en ce que** l'amplification dans la branche d'intégrale du régulateur (PI) est augmentée jusqu'à ce que la valeur de la fonction d'erreur (FF) augmente d'un certain pourcentage et que cette amplification soit réglée.

4. Procédé selon l'une quelconque des revendications 1 à 3, **caractérisé en ce qu'**une impulsion de courant est utilisée comme premier signal test.

5. Procédé selon l'une quelconque des revendications 1 à 3, **caractérisé en ce que** deux impulsions de courant se succédant directement, qui présentent la même valeur, mais une polarité différente, sont utilisées comme premier signal test.

6. Procédé selon l'une quelconque des revendications 4 ou 5, **caractérisé en ce que** l'amplitude des impulsions de courant est limitée à l'intensité de courant maximum autorisée pour le moteur électrique ou à une intensité de courant pour laquelle commence une limitation de courant éventuellement présente.

**7.** Procédé selon la revendication 2, **caractérisé en ce que** la première fonction d'évaluation (BFP) présente une valeur proche de zéro au début de l'intervalle de mesure et le quotient résultant de la somme des facteurs d'évaluation de la première fonction d'évaluation (BFP) et du nombre des facteurs d'évaluation présente la valeur un.

**8.** Procédé selon l'une quelconque des revendications 2 à 7, **caractérisé en ce que** les coefficients (bfi(i)) de la fonction d'évaluation (BFI) sont multipliés par le temps d'ajustage (tn).

**9.** Procédé selon la revendication 2 ou 8, **caractérisé en ce que** le rapport (V) entre la courbe de régime évaluée avec la première fonction d'évaluation (BFP) et la courbe de régime non évaluée est déterminée et aucune oscillation n'est détectée pour un rapport inférieur à un.

**10.** Procédé selon la revendication 2, **caractérisé en ce que** l'amplification, qui est réglée dans la branche proportionnelle du régulateur (PI) avec une oscillation commençante, est multipliée par un facteur de l'ordre de 0,45.

**11.** Procédé selon la revendication 1 ou 2, **caractérisé en ce qu'**une fonction de saut est utilisée comme second signal test.

**12.** Procédé selon la revendication 11, **caractérisé en ce que** la hauteur de saut de la fonction de saut est calculée sur la base de l'amplification réglée dans la branche proportionnelle et de l'intensité de courant maximale autorisée pour le moteur électrique (EM).

**13.** Procédé selon la revendication 11 ou 12, **caractérisé en ce que** deux fonctions de saut sont utilisées comme second signal test, la seconde fonction de saut se raccordant dans le temps directement à la première fonction de saut, présentant la première hauteur de saut, mais présentant un signe différent.

## FIG. 1

DG    EM    BKG    KUS

## FIG. 2

## FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5157597 A
- US 4549123 A
- EP 347465 B1
- US 5475291 A
- US 5587896 A
- DE 19734208